# EUROPEAN PATENT APPLICATION

(11) **EP 2 039 574 A1**
(43) Date of publication of application: **25.03.2009**
(21) Application number: 07743605.3
(22) Date of filing: 11.05.2007
(51) Int. Cl.: B60T 11/28, B60T 11/16, B60T 11/22

(54) **MASTER CYLINDER AND BRAKE SYSTEM USING THE SAME**

(30) Priority: 19.05.2006 JP 2006140034
(71) Applicant: Bosch Corporation, Shibuya-ku Tokyo 150-8360 (JP)
(72) Inventor: TAIRA, Kazuhisa, Higashimatsuyama-Shi, Saitama 3558602 (JP)
(74) Representative: Knapp, Thomas
(86) International application number: PCT/JP2007/060170
(87) International publication number: WO 2007/135966

(57) **Abstract**

A master cylinder of the present invention is disposed with valve bodies (26a) and (28a). Support portions (26b) and (28b) on one end side of these valve bodies (26a) and (28a) are respectively supported in connecting opening portions (22) and (23) of a reservoir (21) so as to be rotatable using these support portions (26b) and (28b) as fulcrums. During the start of operation, when brake fluid flows out from hydraulic chambers (10) and (11) to the reservoir (21), the valve bodies (26a) and (28a) rotate and close such that the flow of the brake fluid is restricted by notches (22a) and (23a), and the dead strokes of pistons (5) and (6) become small. During intake of the brake fluid by pumps, when the brake fluid flows from the reservoir (21) to the hydraulic chambers (10) and (11), the valve bodies (26a) and (28a) rotate and open such that the brake fluid flows to the hydraulic chambers (10) and (11) without its flow being restricted, and fluid self-support performance is ensured.

## Description

### BACKGROUND ART

The present invention relates to the technical field of a master cylinder and a brake system using the same that includes a reservoir that stores hydraulic fluid and which, during normal operation, is capable of cutting off a hydraulic chamber from this reservoir to generate hydraulic pressure and, during non-operation, is capable of taking in hydraulic fluid inside the reservoir through the hydraulic chamber by a pump, and particularly relates to the technical field of a master cylinder and a brake system that ensure a necessary intake amount of hydraulic fluid during intake of hydraulic fluid inside a reservoir by pumps to make the self-support performance of hydraulic fluid excellent and reduce the dead stroke of a master cylinder piston during normal operation.

Conventionally, in brake systems of vehicles such as automobiles, there have been proposed brake systems where, during normal braking operation, braking operates as a result of braking liquid pressure that has been generated by a master cylinder being supplied to wheel cylinders and where, during automatic braking operation in a traction control system or a vehicle stability control system, etc., for example, automatic braking operates as a result of brake fluid inside a reservoir being taken in by pumps through hydraulic chambers of the master cylinder and supplied to the wheel cylinders (e.g., see JP-A-2002-79930 and JP-A-2004-22412, etc.)

Incidentally, in a master cylinder that is used in a brake system that performs normal braking operation by the aforementioned master cylinder and performs automatic braking operation by pumps, it is demanded that, during the start of normal braking operation, the dead strokes of pistons of the master cylinder be reduced as much as possible and that, during automatic braking operation, the brake fluid inside the reservoir be reliably and easily taken in by the pumps through the hydraulic chambers of the master cylinder to thereby make the self-support performance of the brake fluid excellent.

Thus, a master cylinder that responds to this demand has been proposed (e.g., see JP-A-2000-309262). In the master cylinder disclosed in this JP-A-2000-309262, a floating valve body that controls a floatable flow rate in the brake fluid or a throttle valve with a flexible valve seat is disposed in a connecting portion between a cylinder body and a reservoir.

Additionally, during the start of normal braking operation, the floating valve body floats upward and is seated in the reservoir so as to restrict the flow of brake fluid, or the throttle valve with the flexible valve seat is seated in the reservoir to restrict the flow of brake fluid, whereby a situation where the brake fluid escapes from hydraulic chambers of the master cylinder to the reservoir is restricted and the dead strokes of the master cylinder pistons are reduced. On the other hand, during automatic braking operation, the floating valve body moves downward and is seated in the cylinder body so as to not restrict the flow of brake fluid, or the throttle valve with the flexible valve seat bends downward by the flow force of the brake fluid so as to not restrict the flow of the brake fluid, whereby the pumps take in the necessary amount of brake fluid from the reservoir without restriction through the hydraulic chamber of the master cylinder, and the self-support performance of the brake fluid of the master cylinder is made excellent.

Incidentally, in the master cylinder disclosed in the aforementioned JP-A-2000-309262, the dead strokes of the master cylinder pistons during the start of normal braking operation can be reduced, and the self-support performance of the brake fluid during automatic braking operation can be made excellent, but there is room for improvement in the following points.

That is, in the case of the floating valve body, the area between the outer peripheral surface of this floating valve body and the inner peripheral surface of the cylinder body becomes a fluid passage of the brake fluid, so a guide when the floating valve body moves up and down is not disposed in the cylinder body. For this reason, the up-and-down movement of the floating valve body is not stable, and consideration of the stability and reliability of the opening-and-closing operation of the floating valve body becomes necessary. In that case, in JP-A-2000-309262, pushing the floating valve body upward by a compression spring whose spring force is weak is proposed in order to make the upward movement of the floating valve body reliable, but when a compression spring is used in this manner, variations in the spring force and fatigue of the spring arise, so it is necessary to consider these variations and fatigue in the setting of the spring.
Further, in the case of the throttle valve with the flexible valve seat, the valve forcibly bends during the opening-and-closing operation of the valve, so consideration of the durability of the valve resulting from this bending becomes necessary.

### DISCLOSURE OF THE INVENTION

It is an object of the present invention to provide a master cylinder and a brake system using the same that can reduce the dead stroke of a piston during the start of operation by a flow rate control valve to make the self-support performance of hydraulic fluid excellent and can excellently ensure the stability and reliability of the operation of the flow rate control valve and improve the durability of the flow rate control valve.

In order to achieve this object, a master cylinder pertaining to the present invention comprises a cylinder body, an axial hole in this cylinder body, a piston that is fitted and inserted into this axial hole so as to be liquid-tight and slidable, and a hydraulic chamber that is formed inside the axial hole in the cylinder body by this piston, is communicated with the reservoir during non-operation of the piston and is cut off from the reservoir such that hydraulic fluid is supplied to an external device during operation of the piston, with a flow rate control valve being disposed in a hydraulic fluid passage between the reservoir and the hydraulic chamber such that, when hydraulic fluid flows from the hydraulic chamber to the reservoir, the flow rate control valve restricts the flow of that hydraulic fluid and, when hydraulic fluid flows from the reservoir to the hydraulic chamber, the flow rate control valve does not restrict the flow of that hydraulic fluid, wherein the flow rate control valve is disposed with a valve body whose one end portion is rotatably supported in the reservoir or the cylinder body, and, when hydraulic fluid flows from the hydraulic chamber to the reservoir, the valve body rotates using the one end portion as a fulcrum and closes to thereby restrict the flow of the hydraulic fluid and, when hydraulic fluid flows from the reservoir to the hydraulic chamber, the valve body rotates using the one end portion as a fulcrum and opens to thereby not restrict the flow of the hydraulic fluid.

Further, in the present invention, when the valve body is closed, the valve body forms a fluid passage with a small flow path area between itself and the reservoir or the cylinder body and, when the valve body is opened, the valve body forms a fluid passage with a larger flow path area than the flow path area when the valve body is closed.

Moreover, in the present invention, a notch is formed in the reservoir or the cylinder body, and the fluid passage with the small flow path area is formed by the valve body and the notch when the valve body is closed.

Moreover, in the present invention, a small hole is formed in the valve body, and the fluid passage with the small flow path area is formed by the small hole in the valve body when the valve body is closed.

Moreover, a brake system of the present invention comprises at least: a master cylinder comprising a cylinder body, an axial hole in this cylinder body, a piston that is fitted and inserted into this axial hole so as to be liquid-tight and slidable, and a hydraulic chamber that is formed inside the axial hole in the cylinder body by this piston, is communicated with the reservoir during non-operation of the piston and is cut off from the reservoir during operation of the piston, with a flow rate control valve being disposed in a hydraulic fluid passage between the reservoir and the hydraulic chamber such that, when hydraulic fluid flows from the hydraulic chamber to the reservoir, the flow rate control valve restricts the flow of that hydraulic fluid and, when hydraulic fluid flows from the reservoir to the hydraulic chamber, the flow rate control valve does not restrict the flow of that hydraulic fluid; a brake cylinder to which brake fluid is supplied from the hydraulic chamber during operation of the piston to generate brake force; and brake fluid intake means that is connected to the hydraulic chamber and is capable of taking in brake fluid inside the reservoir and supplying the brake fluid to the brake cylinder during non-operation of the piston, wherein the master cylinder is the above-described master cylinder of the present invention.

According to the master cylinder pertaining to the present invention that is configured in this manner, the flow rate control valve that controls the flow of the hydraulic fluid between the reservoir and the hydraulic chamber is disposed with the valve body whose one end portion is rotatably supported, so by causing the valve body to rotate using the one end portion as a fulcrum, the valve body can be stably and reliably caused to open and close, and the flow rate control valve can be configured by a simple structure. Moreover, the valve body is simply caused to rotate in response to the flow of the hydraulic fluid, so the durability of the valve body can be improved.

Further, during the start of operation of the master cylinder, the hydraulic fluid tries to escape from the hydraulic chamber of the master cylinder to the reservoir, but the flow rate control valve closes in response to the flow of that hydraulic fluid and restricts the flow of the hydraulic fluid that escapes from the hydraulic chamber of the master cylinder to the reservoir, so during the start of operation of the master cylinder, the amount of the hydraulic fluid that escapes to the reservoir can be reduced, and the dead stroke of the piston of the master cylinder can be reduced.

Moreover, when the master cylinder supplies the hydraulic fluid to the external device, the hydraulic fluid tries to flow from the reservoir of the master cylinder to the hydraulic chamber, but the flow rate control valve opens in response to the flow of that hydraulic fluid and does not restrict the flow of the hydraulic fluid that is taken in from the reservoir of the master cylinder through the hydraulic chamber, so a sufficient amount of the hydraulic fluid can be reliably supplied to the external device, and excellent self-support performance of the hydraulic fluid of the master cylinder can be obtained.

Moreover, the fluid passage with the small flow path area that is formed when the flow rate control valve closes is configured by the notch that is formed in the reservoir or the cylinder body or by the small hole that is formed in the valve body, so the flow rate restrictive control of the flow rate control valve can be performed by a simple structure, and the operational reliability of the flow rate control valve can be further improved.

In particular, according to the brake system pertaining to the present invention, during the start of operation of the master cylinder, the dead stroke of the piston of the master cylinder can be reduced, so the dead stroke of the brake pedal can be reduced and the pedal feeling can be improved.

Further, when automatic braking is caused to operate as a result of the brake fluid intake means being operated such that the brake fluid is taken in from the reservoir through the hydraulic chamber of the master cylinder and supplied to the brake cylinder, excellent self-support performance of the hydraulic fluid of the master cylinder can be obtained, so automatic braking can be reliably caused to operate.

### BRIEF DESCRIPTION OF THE DRAWINGS

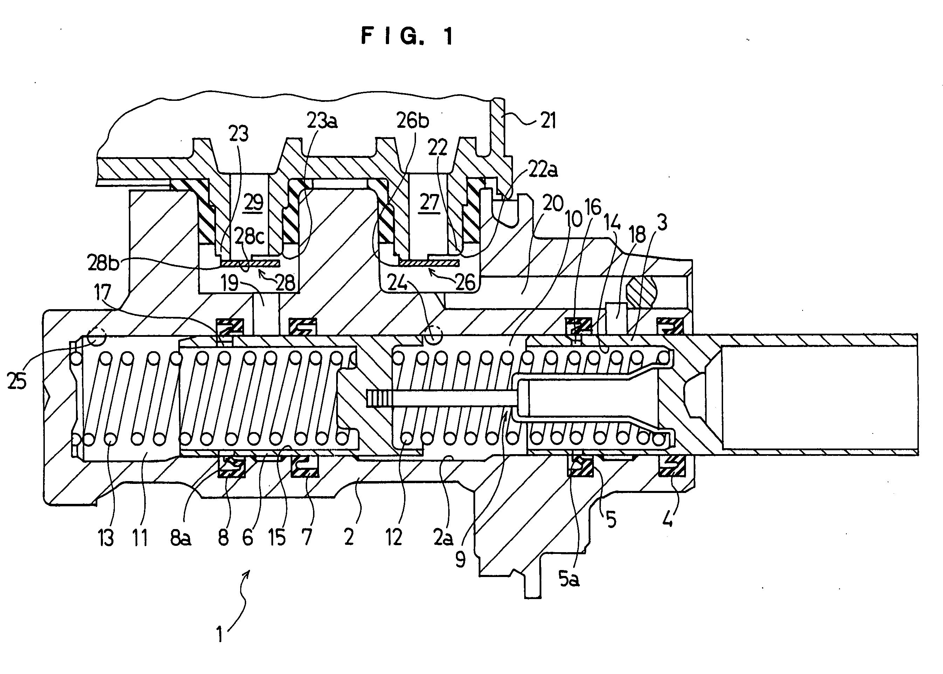

FIG. 1 is longitudinal sectional diagram schematically showing an example of an embodiment of a master cylinder pertaining to the present invention.

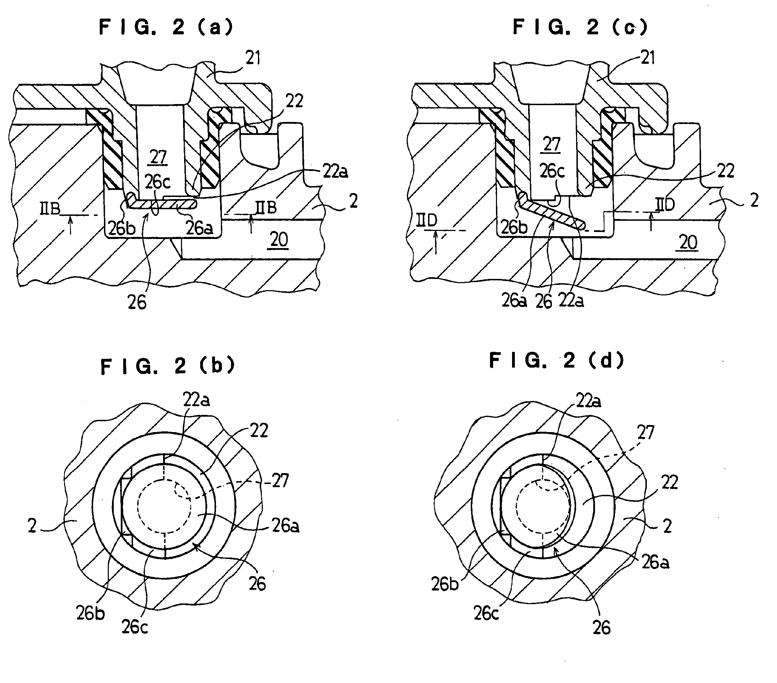

FIG. 2 shows a first connecting opening portion of a reservoir of the example shown in FIG. 1, with (a) being a partially enlarged diagram of FIG. 1 showing a non-operating state of a valve, (b) being a cross-sectional diagram along line IIB-IIB in (a), (c) being the same diagram as (a) showing an operating state of the valve, and (d) being a cross-sectional diagram along line IID-IID in (c).

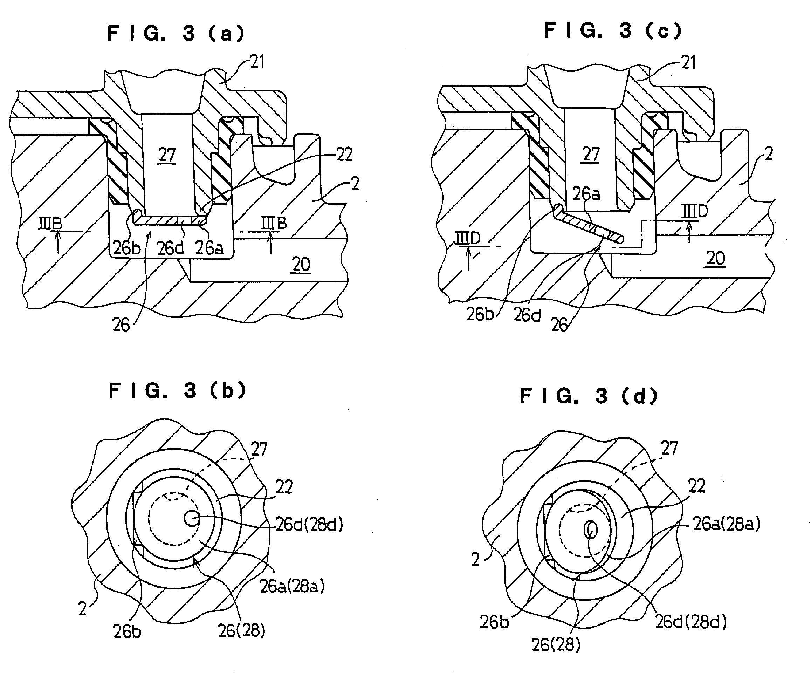

FIG. 3 schematically shows the first connecting opening portion of the reservoir of another example of the embodiment of the master cylinder pertaining to the present invention, with (a) being the same diagram as FIG. 2 (a) showing a non-operating state of the valve, (b) being a cross-sectional diagram along line IIIB-IIIB in (a), (c) being the same diagram as FIG. 2 (c) showing an operating state of the valve, and (d) being a cross-sectional diagram along line IIID-IIID in (c).

### BEST MODES FOR IMPLEMENTING THE INVENTION

Below, the best modes for implementing the present invention will be described using the drawings.
FIG. 1 is a longitudinal sectional diagram schematically showing an example of an embodiment of a master cylinder pertaining to the present invention, and FIG. 2 shows a first connecting opening portion of a reservoir of the example shown in FIG. 1, with (a) being a partially enlarged diagram of FIG. 1 showing a non-operating state of a valve, (b) being a cross-sectional diagram along line IIB-IIB in (a), (c) being the same diagram as (a) showing an operating state of the valve, and (d) being a cross-sectional diagram along line IID-IID in (c). In the following description, front and rear correspond respectively to left and right in FIG. 1.

As shown in FIG. 1, a master cylinder 1 of this example is configured as a tandem master cylinder, and this master cylinder 1 includes a cylinder body 2. A primary piston 3 is fitted into an axial hole 2a in this cylinder body 2 so as to be liquid-tight by first and second cup seals 4 and 5 and slidable, and a secondary piston 6 is fitted into the axial hole 2a in this cylinder body 2 so as to be liquid-tight by third and fourth cup seals 7 and 8 and slidable. Both of these pistons 3 and 6 are coupled together by a spacing member 9 that may freely extend and contract. The primary piston 3 is operated by the pedal stepping force of an unillustrated brake pedal or the output of a booster device that boosts, by a predetermined servo ratio, and outputs this pedal force, so that the primary piston 3 moves forward.

Inside the axial hole 2a in the cylinder body 2, a primary hydraulic chamber 10 is disposed between both of the pistons 3 and 6 and a secondary hydraulic chamber 11 is disposed between the bottom portion of the axial hole 2a in the cylinder body 2 and the secondary piston 6. Further, inside the primary hydraulic chamber 10, a primary return spring 12 is compressively disposed between both of the pistons 3 and 6, and inside the secondary hydraulic chamber 11, a secondary return spring 13 is compressively disposed between the bottom portion of the axial hole 2a in the cylinder body 2 and the secondary piston 6. During non-operation of the master cylinder 1, the spacing member 9 extends to a maximum by the spring force of the primary return spring 12 and maximally spaces both of the pistons 3 and 6.

The primary piston 3 includes a first axial-shaped hole 14 that opens to the front end and configures part of the primary hydraulic chamber 10, and the secondary piston 6 includes a second axial hole 15 that opens to the front end and configures part of the secondary hydraulic chamber 11. Further, a predetermined number of first radial holes 16 that allow the outer peripheral surface of the primary piston 3 and the inner peripheral surface of the first axial hole 14 to be communicated are disposed in the primary piston 3 at predetermined intervals in the circumferential direction, and a predetermined number of second radial holes 17 that allow the outer peripheral surface of the secondary piston 6 and the inner peripheral surface of the second axial hole 15 to be communicated are disposed in the secondary piston 6 at predetermined intervals in the circumferential direction.

In the cylinder body 2, first and second brake fluid supply-drain holes 18 and 19 are disposed such that both open to the axial hole 2a. The first brake fluid supply-drain hole 18 is communicated with a first connecting opening portion 22 of a reservoir 21 through a passage hole 20 that is disposed in the cylinder body 2, and the second brake fluid supply-drain hole 19 is communicated with a second connecting opening portion 23 of the reservoir 21.

In a non-operating state of the master cylinder 1, both of the pistons 3 and 6 are respectively disposed in backward limit positions shown in FIG. 1 by the spring forces of the primary return spring 12 and the secondary return spring 13. In the backward limit position of the primary piston 3, part of the first radial hole 16 is positioned further rearward than a lip portion 5a of the second cup seal 5 and, at this time, the primary hydraulic chamber 10 is communicated with the first connecting opening portion 22 of the reservoir 21 through the radial hole 16, a gap between the outer peripheral surface of the primary piston 3 and the inner peripheral surface of the axial hole 2a, the first brake fluid supply-drain hole 18, and the passage hole 20. Further, in the backward limit position of the secondary piston 6, part of the second radial hole 17 is positioned further rearward than a lip portion 8a of the fourth cup seal 8 and, at this time, the secondary hydraulic chamber 11 is communicated with the second communication opening portion 23 of the reservoir 21 through the second radial hole 17, a gap between the outer peripheral surface of the secondary piston 6 and the inner peripheral surface of the axial hole 2a, and the second brake fluid supply-drain hole 19.

The primary hydraulic chamber 10 and the secondary hydraulic chamber 11 are respectively connected to wheel cylinders of unillustrated first and second brake systems (which correspond to external devices and brake cylinders of the present invention) via a first output opening 24 and a second output opening 25. In that case, although they are not shown, automatic brake systems resulting from pumps (which correspond to brake fluid intake means of the present invention) that take in brake fluid (which corresponds to hydraulic fluid of the present invention) of the reservoir 21 that are the same as the conventional automatic brake systems disclosed in JP-A-2002-79930 and JP-A-2004-22412, for example, are disposed between the first and second output openings 24 and 25 and each of the wheel cylinders.

As shown in FIG. 2 (a) to (d), a flow rate control valve 26 is disposed on the distal end of the first connecting opening portion 22 of the reservoir 21. A valve body 26a of this flow rate control valve 26 is formed in a substantially circular flat plate shape, and a support portion 26b on one end side of the valve body 26a is supported in the first connecting opening portion 22 so as to be rotatable using this support portion 26b as a fulcrum. This valve body 26a is configured by a synthetic resin (e.g., polypropylene and the like) that easily floats in the brake fluid. Further, a notch 22a is formed in the distal end of the first connecting opening portion 22 on the opposite side of an attachment portion of the support portion 26b.

Additionally, in a non-operating state of the flow rate control valve 26 that is shown in FIG. 2 (a) and (b), the valve body 26a abuts against part of a valve seat 26c that is formed on the distal end of the first connecting opening portion 22 such that the flow rate control valve 26 closes. In this state where the flow rate control valve 26 is closed, a connecting hole 27 in the reservoir 21 and the passage hole 20 in the cylinder body 2 are communicated through the notch 22a. Consequently, when the flow rate control valve 26 is closed, the primary hydraulic chamber 10 and the reservoir 21 are communicated via a fluid passage with a small flow path area that comprises the notch 22a.

On the other hand, in an operating state of the flow rate control valve 26 that is shown in FIG. 2 (c) and (d), the valve body 26a rotates clockwise in FIG. 2(c) about the support portion 26b and moves away from the valve seat 26c on the distal end of the first connecting opening portion 22 such that the flow rate control valve 26 opens. In this state where the flow rate control valve 26 is opened, the connecting hole 27 in the reservoir 21 and the passage hole 20 in the cylinder body 2 are communicated through a passage with a large flow path area of the entirety of the connecting hole 27 that includes the notch 22a. Consequently, when the flow rate control valve 26 is opened, the primary hydraulic chamber 10 and the reservoir 21 are communicated such that the flow path area is expanded without being restricted.

As shown in FIG. 1, a flow rate control valve 28 that is exactly the same as the flow rate control valve 26 is also disposed on the distal end of the second connecting opening portion 23 of the reservoir 21 in exactly the same manner as the flow rate control valve 26, and a notch 23a is formed in the distal end of the second connecting opening portion 23. In a state where the flow rate control valve 28 is closed, a connecting hole 29 in the reservoir 21 and the second brake fluid supply-drain hole 19 in the cylinder body 2 are communicated through the notch 23a. Consequently, when the flow rate control valve 28 is closed, the secondary hydraulic chamber 11 and the reservoir 21 are communicated, such that the flow path area is restricted, via a fluid passage that comprises the notch 23a.

In the master cylinder 1 of this example that is configured in this manner, during non-operation thereof, as shown in FIG. 1 and FIG. 2(a) and (b), the valve body 26a of the flow rate control valve 26 receives buoyant force from the brake fluid and abuts against the valve seat 26c on the distal end of the first connecting opening portion 22 of the reservoir 21, and, as generally shown in FIG. 1, the valve body 28a of the flow rate control valve 28 similarly receives buoyant force from the brake fluid and abuts against a valve seat 28c on the distal end of the second connecting opening portion 23 of the reservoir 21, so the flow rate control valve 26 and the flow rate control valve 28 are in a closed state.

In this state, when normal braking operation resulting from pressing on the brake pedal is performed, similar to a conventional common tandem master cylinder, the primary piston 3 moves forward. Additionally, when all of the first radial holes 16 in the primary piston 3 are positioned further frontward than the lip portion 5a of the second cup seal 5, the primary hydraulic chamber 10 and the reservoir 21 are cut off, and hydraulic pressure generates in the primary hydraulic chamber 10.

Further, the secondary piston 6 moves forward by pushing force from the primary piston 3 via the primary return spring 12 and by the hydraulic pressure inside the primary hydraulic chamber 10. Additionally, when all of the second radial holes 17 in the secondary piston 6 are positioned further frontward than a lip portion 7a of the fourth cup seal 7, the secondary hydraulic chamber 11 and the reservoir 21 are cut off, and hydraulic pressure generates in the secondary hydraulic chamber 11.

Additionally, when all of the first radial holes 16 move further frontward than the lip portion 5a of the second cup seal 5, and when all of the second radial holes 17 move further frontward than the lip portion 7a of the fourth cup seal 7, each of the brake fluids inside the primary hydraulic chamber 10 and the secondary hydraulic chamber 11 tries to flow out toward the reservoir 21, but because both of the flow rate control valves 26 and 28 are in a closed state, each of the brake fluids inside the primary hydraulic chamber 10 and the secondary hydraulic chamber 11 respectively flows out just via the fluid passages whose flow path areas are relatively small and which comprise the notches 22a and 23a.

Consequently, the flow of each of the brake fluids inside the primary hydraulic chamber 10 and the secondary hydraulic chamber 11 into the reservoir 21 is restricted, and the outflow amount of each of the brake fluids into the reservoir 21 is restricted. Thus, each of the brake fluids inside the primary hydraulic chamber 10 and the secondary hydraulic chamber 11 is effectively supplied to each of the wheel cylinders via the first output opening 24 and the second output opening 25, so loss strokes of the brake systems from the master cylinder 1 to the wheel cylinders are relatively quickly eliminated, and the pedal stroke is shortened.

When the brake pedal is released and normal braking operation is ended, similar to a conventional common tandem master cylinder, the primary piston 3 and the secondary piston 6 move backward by each of the spring forces of the primary return spring 12 and the secondary return spring 13.

Additionally, as shown in FIG. 1, when some of the first radial holes 16 in the primary piston 3 are positioned further rearward than the lip portion 5a of the second cup seal 5, the primary hydraulic chamber 10 and the reservoir 21 become communicated, and when some of the second radial holes 17 in the secondary piston 6 are positioned further rearward than the lip portion 7a of the fourth cup seal 7, the secondary hydraulic chamber 11 and the reservoir 21 become communicated. Thus, each of the brake fluids inside the primary hydraulic chamber 10 and the secondary hydraulic chamber 11 is returned to the reservoir, the insides of the primary hydraulic chamber 10 and the secondary hydraulic chamber 11 become atmospheric pressure, and normal braking operation ends.

Additionally, the primary piston 3 and the secondary piston 6 move backward to their backward limit positions shown in FIG. 1, but at this time, the insides of the primary hydraulic chamber 10 and the secondary hydraulic chamber 11 try to become negative pressure and interfere with the return of both of the pistons 3 and 6. However, at this time, the brake fluid flows from the reservoir 21 toward the primary hydraulic chamber 10 and the secondary hydraulic chamber 11.

For this reason, as shown in FIG. 2 (c) and (d), the valve body 26a of the flow rate control valve 26 rotates using the support portion 26b as a fulcrum, and, as generally shown in FIG. 1, the valve body 28a of the flow rate control valve 28 rotates using the support portion 28b as a fulcrum, so the flow rate control valves 26 and 28 open. Consequently, the brake fluid flow path areas expand, brake fluid are supplied from the reservoir 21 to the primary hydraulic chamber 10 and the secondary hydraulic chamber 11, and the primary piston 3 and the secondary piston 6 reliably move backward to the backward limit positions and become non-operating.

On the other hand, when automatic braking in a traction control system or a vehicle stability control system (ESP), etc., for example, operates, similar to a conventional automatic brake system, the brake fluid inside the reservoir 21 is taken in through the master cylinder 1 by the pumps that are disposed between the master cylinder 1 and the wheel cylinders. At this time, brake fluid flows from the reservoir 21 to the primary hydraulic chamber 10 and the secondary hydraulic chamber 11.

For this reason, as shown in FIG. 2 (c) and (d), each of the valve bodies 26a and 28a respectively rotates using the support portions 26b and 28b as fulcrums, so the flow rate control valves 26 and 28 open. Consequently, the brake fluid flow path areas expand, and brake fluid necessary for automatic braking operation is reliably supplied from the reservoir 21 to each of the wheel cylinders through the primary hydraulic chamber 10 and the secondary hydraulic chamber 11. In this manner, automatic braking operates.

When the pumps are stopped in order to end automatic braking, the brake fluid that has been supplied to each of the wheel cylinders is returned to the reservoir 21 through the primary hydraulic chamber 10 and the secondary hydraulic chamber 11 of the master cylinder 1, and automatic braking stops. At this time, the flow rate control valves 26 and 28 close, but because the brake fluid is returned to the reservoir 21 through the notch 22a, residual pressure does not arise inside both of the hydraulic chambers 10 and 11 of the master cylinder 1.

According to the master cylinder 1 of this example, the flow rate control valves 26 and 28 close, and the brake fluid that escapes to the reservoir 21 from both of the hydraulic chambers 10 and 11 of the master cylinder 1 can be controlled by the notch 22a, so during the start of operation of the master cylinder 1, the amount of the brake fluid that escapes to the reservoir 21 can be reduced and the dead strokes of the pistons of the master cylinder 1 can be reduced. Thus, the feeling of the brake pedal can be made excellent.

Further, when the pumps take in brake fluid from the reservoir 21 through both of the hydraulic chambers 10 and 11 of the master cylinder 1 during automatic braking operation in a traction control system or a vehicle stability control system, etc, for example, the flow rate control valves 26 and 28 open such that large flow path areas are ensured, so a sufficient amount of brake fluid can be smoothly supplied to the wheel cylinders from the reservoir 21. Consequently, excellent fluid self-support performance during automatic braking operation can be ensured, and automatic braking can be reliably caused to operate.

Moreover, in the flow rate control valves 26 and 28, the support portions 26b and 28b on one end side of their valve bodies 26a and 28a are respectively rotatably supported in the first connecting opening portion 22 and the second connecting opening portion 23, so their valve bodies 26a and 28a can be made rotatable using the support portions 26b and 28b as fulcrums. Consequently, the valve bodies 26a and 28a can be stably and reliably caused to open and close, and the flow rate control valves 26 and 28 can be configured by simple structures. Moreover, by simply disposing the notches 22a and 23a in the first connecting opening portion 22 and the second connecting opening portion 23, the flow rate restriction control of the flow rate control valves 26 and 28 can be performed, and the operational reliability of the flow rate control valves 26 and 28 can be improved.

FIG. 3 schematically shows the first connecting opening portion of the reservoir of another example of the embodiment of the master cylinder pertaining to the present invention, with (a) being the same diagram as FIG. 2 (a) showing a non-operating state of the valve, (b) being a cross-sectional diagram along line IIIB-IIIB in (a), (c) being the same diagram as FIG. 2 (c) showing an operating state of the valve, and (d) being a cross-sectional diagram along line IIID-IIID in (c). It will be noted that, by adding identical reference numerals to configural elements that are the same as those of the preceding example, detailed description thereof will be omitted.

In the preceding example shown in FIG. 1 and FIG. 2, the notches 22a and 23a are respectively disposed in the first and second connecting opening portions 22 and 23 of the reservoir 21, and the flows of the brake fluid are restricted by fluid passages resulting from these notches 22a and 23a during non-operation of the flow rate control valves 26 and 28, but as shown in FIG. 3 (a) to (d), in the master cylinder 1 of this example, the notches 22a and 23a are not disposed in either of the first and second connecting opening portions 22 and 23 of the reservoir 21, but instead, small holes 26d and 28d that penetrate the upper and lower surfaces of the valve bodies 26a and 28a are respectively drilled in the valve bodies 26a and 28a of the flow rate control valves 26 and 28 (for the sake of convenience of description, reference numerals 28a and 28d are also shown in parentheses in FIG. 3(b) and (d)).

The small holes 26d and 28d in these valve bodies 26a and 28a both have the same function as that of the notches 22a and 23a of the preceding example. In other words, in a state where the flow rate control valves 26 and 28 are closed, the reservoir 21 and both of the hydraulic chambers 10 and 11 of the cylinder body 2 are communicated via the small holes 26d and 28d with narrow flow path areas. Consequently, when the flow rate control valves 26 and 28 are closed, the brake fluid flows with its flow rate being restricted by fluid passages that comprise the small holes 26d and 28d.

According to the master cylinder 1 of this example, it is not necessary to administer special working to the first and second connecting opening portions 22 and 23 of the reservoir 21, and it suffices simply to prepare the valve bodies 26a and 28a in which the small holes 26d and 28d have been disposed beforehand. Consequently, the manufacture of the master cylinder 1 becomes easier by that amount.
Other configurations and other action and effects of the master cylinder 1 of this example are the same as those of the preceding example.

### INDUSTRIAL APPLICABILITY

The master cylinder pertaining to the present invention can be suitably utilized in a master cylinder that ensures a necessary intake amount of hydraulic fluid during intake of hydraulic fluid inside a reservoir by pumps to make the self-support performance of hydraulic fluid excellent and reduce the dead strokes of master cylinder pistons during normal operation.

Further, the brake system pertaining to the present invention can be suitably utilized in a brake system that is disposed with an automatic brake system (e.g., a traction control system or a vehicle stability control system, etc.) that pressurizes brakes of wheel cylinders by pump driving to perform braking, reduces the dead strokes of pistons of a master cylinder during normal braking operation, and makes the brake pedal feeling excellent.

## Claims

1. A master cylinder comprising a cylinder body, an axial hole in this cylinder body, a piston that is fitted and inserted into this axial hole so as to be liquid-tight and slidable, and a hydraulic chamber that is formed inside the axial hole in the cylinder body by this piston, is communicated with a reservoir during non-operation of the piston and is cut off from the reservoir such that hydraulic fluid is supplied to an external device during operation of the piston, with a flow rate control valve being disposed in a hydraulic fluid passage between the reservoir and the hydraulic chamber such that, when hydraulic fluid flows from the hydraulic chamber to the reservoir, the flow rate control valve restricts the flow of that hydraulic fluid and, when hydraulic fluid flows from the reservoir to the hydraulic chamber, the flow rate control valve does not restrict the flow of that hydraulic fluid,
wherein the flow rate control valve is disposed with a valve body whose one end portion is rotatably supported in the reservoir or the cylinder body, and, when hydraulic fluid flows from the hydraulic chamber to the reservoir, the valve body rotates using the one end portion as a fulcrum and closes to thereby restrict the flow of the hydraulic fluid and, when hydraulic fluid flows from the reservoir to the hydraulic chamber, the valve body rotates using the one end portion as a fulcrum and opens to thereby not restrict the flow of the hydraulic fluid.

2. The master cylinder of claim 1, wherein when the valve body is closed, the valve body forms a fluid passage with a small flow path area between itself and the reservoir or the cylinder body and, when the valve body is opened, the valve body forms a fluid passage with a larger flow path area than the flow path area when the valve body is closed.

3. The master cylinder of claim 2, wherein a notch is formed in the reservoir or the cylinder body, and the fluid passage with the small flow path area is formed by the valve body and the notch when the valve body is closed.

4. The master cylinder of claim 2, wherein a small hole is formed in the valve body, and the fluid passage with the small flow path area is formed by the small hole in the valve body when the valve body is closed.

5. A brake system comprising at least:
a master cylinder comprising a cylinder body, an axial hole in this cylinder body, a piston that is fitted and inserted into this axial hole so as to be liquid-tight and slidable, and a hydraulic chamber that is formed inside the axial hole in the cylinder body by this piston, is communicated with a reservoir during non-operation of the piston and is cut off from the reservoir during operation of the piston, with a flow rate control valve being disposed in a hydraulic fluid passage between the reservoir and the hydraulic chamber such that, when hydraulic fluid flows from the hydraulic chamber to the reservoir, the flow rate control valve restricts the flow of that hydraulic fluid and, when hydraulic fluid flows from the reservoir to the hydraulic chamber, the flow rate control valve does not restrict the flow of that hydraulic fluid;
a brake cylinder to which brake fluid is supplied from the hydraulic chamber during operation of the piston to generate brake force; and
brake fluid intake means that is connected to the hydraulic chamber and is capable of taking in brake fluid inside the reservoir and supplying the brake fluid to the brake cylinder during non-operation of the piston,
wherein the master cylinder is the master cylinder of any one of claims 1 to 4.
